# EUROPEAN PATENT SPECIFICATION

(11) **EP 0 285 580 B1**
(45) Date of publication and mention of the grant of the patent: **14.09.1994**
(21) Application number: 88830126.4
(22) Date of filing: 28.03.1988
(51) Int. Cl.: F16K 5/10, F16K 1/52

(54) **Improvement in needle members for minimum adjustment in gas delivering cocks for hot plates, gas kitchens and the like**
Nadeln für Minimaleinstellung in Gashähnen von Kochplatten, Gasküchen und dergleichen
Pointeaux d'écoulement minimum dans des boisseaux à gaz pour plateaux chauffants, cuisinières à gaz et similaires

(30) Priority: 03.04.1987 IT 3570387 U
(43) Date of publication of application: 05.10.1988
(73) Proprietor: LA MICROMECCANICA del Cav. Libero Balestra & C. S.p.A., I-47100 Forli (IT)
(72) Inventor: Libero, Balestra, I-47100 Forli (IT)
(74) Representative: Taliercio, Antonio

(56) References cited:
- BE-A- 528 117
- CH-A- 354 740
- FR-A- 1 425 428
- US-A- 2 266 758
- US-A- 2 750 979

## Description

This invention relates in general to gas delivering valves for hot plates, gas kitchens and the like, and it relates in particular to the structure of idle or "minimum" adjustment needle members in said valves.

As already known, the gas delivering valves include a body having internally a bottom chamber extending outwardly (that is, practically, towards the knob) through a conical or flared cavity in which a conical member is lodged, the latter implementing the adjustment and the closing of the required gas flow. In particular, generally, said conical member is sealingly engaged into the body, thanks also to the loading of a spring, and the same is connected with its larger base to the shaft of the knob used for effecting the rotation of the conical member among the positions of "maximum" gas delivery rate, "minimum" or idle gas delivery rate and "closed"; besides, the latter shows on its smaller base a central cavity from which some holes extend for adjustment. One of said holes is that of the "minimum" and it works together with a so-called needle member.

The needle member is made up by a small cylinder, shaped and screwable down, sealingly engaged in an axial seat formed within the conical member, or in a seat provided within the body of the valve; the same has a screw head operable from the outside with a screwdriver, through the shaft effecting the rotation of the cone, or directly on the head of the needle, when latter is not screwed down in the conical member but in the body of the cock. The needle member shows also a chamfered point, interacting with a correspondent chamfering provided in the axial seat. While, in order to change the mass flow rate of the gas in the "maximum" position, it is required to change the final nozzle, mounted on the valve or on the burner, when the mass flow of the gas in the "minimum" position, is to be changed it is required to adjust the axial position of the needle, by having the same to advance to a greater or smaller extent, which is obtained by screwing down the same within the seat of the conical member or of the body, using a screwdriver. In this way the communication between the "minimum" rate hole, as provided in the conical body, and its central outlet cavity is adjusted. In its adjusted position, the gas passes all around or even through the needle, which thus performs its function of letting the gas flow out in the amount required for the "minimum" feeding of the burner.

CH-A-354 740 discloses a knob operable valve for feeding gas in hot plates showing the features of the preamble of sole claim.

In US-A-2 750 979 a self-locking construction of a threaded bushing is disclosed comprising two groups of circumferentially spaced inner and outer threaded segments separated by grooves, said segments being initially outwardly and inwardly deflecting so that when the bushing is screwed into the valve body the outer segments are deflected inwardly, as stiff springs, to resiliently grip the valve body threads and when the needle member is screwed into the bushing, the inner segments are deflected outwardly, as stiff springs, to resiliently grip the needle member threads, thereby obtaining a self-locking action of the assembly housing-bushing-needle member.

A shortcoming of the known structure is due to the fact that, owing to the intrinsic elasticity of the annular gasket, as well as to the torsional stress being applied upon the same during the operations of insertion and of displacement (screwing down or unscrewing) of the needle member within its seat, as time elapses the needle is displaced and the prestablished mass flow rate varies beyond the desired range, thus causing an improper performance of the burner. The movement possibility of the needle member is given by the fact that the coupling between the screw threads of the needle and the screw threads of the seat unavoidably shows some backlash, due to the unavoidable machining allowances and to wear.

The object of this invention is to remove said shortcoming, as well as to implement a needle member whose screw threads may engage elastically and without any backlash the screw threads of the relevant seat, thus avoiding that the adjusted position given to the same in a known way, might be subsequently modified.

Said object is obtained by means of a knob operable valve according to the preamble of claim 1 and having the features set forth in the characterizing portion of claim 1.

Further features and advantages of this invention will become apparent in the following description, with reference to the annexed drawings, wherein the preferred embodiment is shown by way of illustration and not by way of limitation.

In the drawings:
Figure 1 shows a partial cross-section side view of the adjusting needle member;
Figure 2 shows an axial view of the pointed end of the needle member;
Figure 3 shows a cross-section view, along line A-A of Figure 1;
Figure 4 shows a partial cross-section view of the needle member, in its fully unscrewed position;
Figure 5 shows a view corresponding to Figure 1, except that the needle member is in its fully screwed down position;
Figure 6 shows a view in which the needle member is assembled within the body of the valve, rather than within the conical member.

With reference to the drawings, it can be seen that the needle member 10 includes a cylindrical body with screw head 11, immediately under which a perimetral groove 12 is provided, in which an annular gasket 13 of the so-called "O-ring" type is assembled. The needle member 10 shows on its pointed end a chamfering 14 and possibly a through diametral hole 15, with its axial pinhole 16. Needle member 10 has also a screw threaded intermediate portion 17, which engages into a corresponding thread 18, obtained either on the inside wall of the seat suitably provided within the conical member 20 (partially shown), embodied into the valve, or on a part of body C, outside the conical member.

The end chamfering 14 of the needle member 10 cooperates with the corresponding chamfering 19 of the seat provided within the conical member 20, or within the body C.

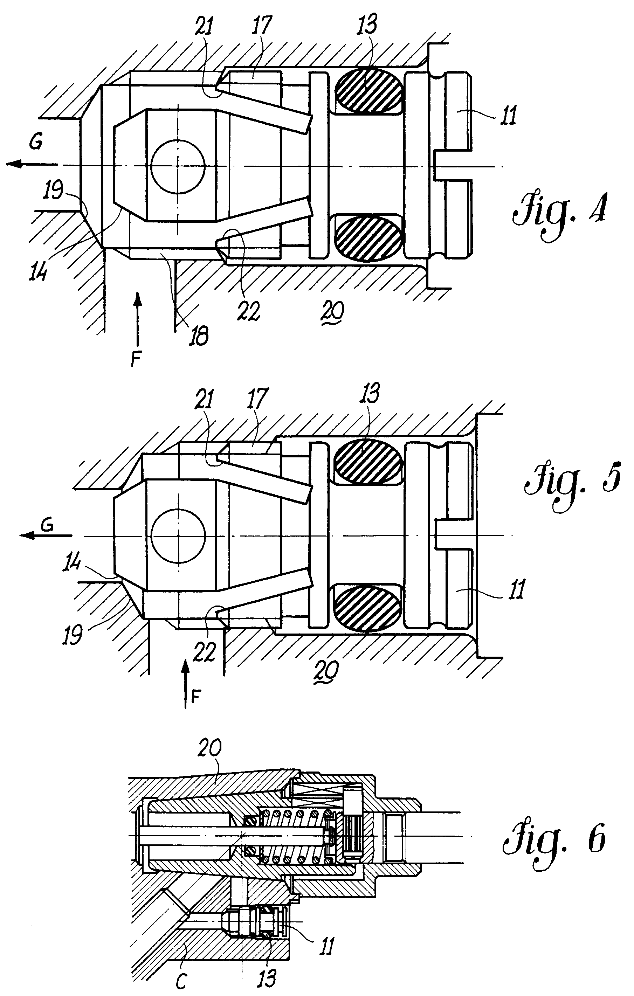

The minimum rate adjustment is performed by acting with a screwdriver uppon the head 11 of the needle member 10, by screwing down or unscrewing the same on the thread 18, to the required extent. Both positions of maximum unscrewing and of maximum screwing down, are shown in the Figures 4 and 5. By the arrow F, the side inlet of gas through the minimum rate hole is shown, while by the arrow G the axial flow of the gas being fed to the burner is shown.

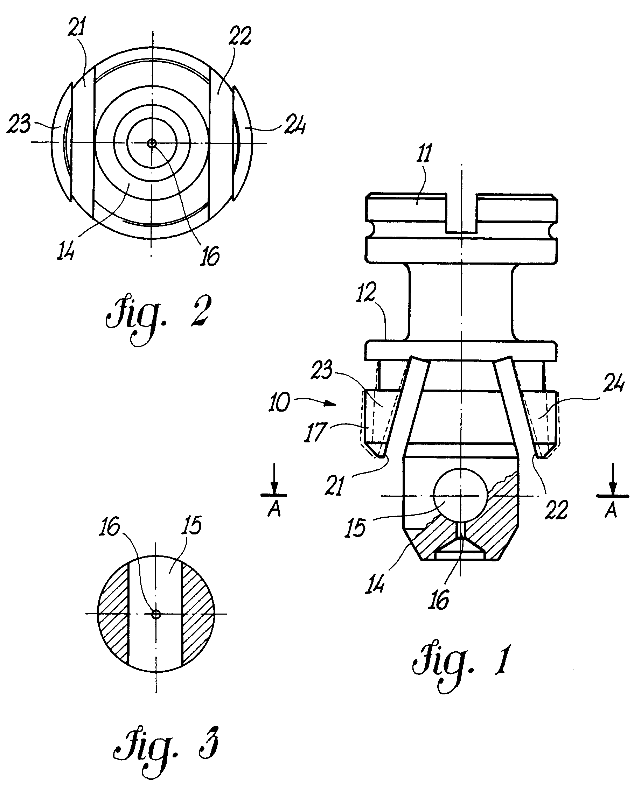

In order to avoit the above referred to shortcomings, in correspondence with the screw threaded intermediate portion 17, within the body of the needle member 10 two simmetrical, diametrally opposed, convergent and slanting cuts, 21 and 22, are provided, thereby forming two threaded segments or tongues, 23 and 24. Said screw threaded segments 23, 24 are subsequently slightly spread apart outwardly, in order to take up the positions shown by the dashed line in the Figure 1. Of course, this will entail some slight protrusion of said screw threaded segments outside the external circular profile of the needle member (as it can be seen, other than from the dashed lines in Figure 1, also from Figure 2).

When the needle member 10 is screwed down in its suitable seat of the conical member or of the body, some greater resistance to screwing down will be felt, owing to the deformation of the screw threaded segments 23 and 24: however said deformation, this time inwardly directed, is kept within the elasticity limits of the material. Therefore, in the operating position, said screw threaded segments 23 and 24 will be always kept elastically pressed against the corresponding threads of the lodging seat, thus eliminating any backlash and any displacement of said needle member 10 from its adjusted position.

The preferred embodiment has been herein above described, but it is to be understood that those skilled in the art may make modifications and changes to the manufacturing details, without consequently departing from the scope of sole claim.

## Claims

1. A knob operable valve for feeding gas in hot plates comprising:
a housing (20) having an axial bore between inlet and outlet holes, a seat (19) at the outlet hole, and a transverse hole for feeding the gas into the valve, said bore having partially an internally threaded surface
a valve needle member (10) including means for adjusting a minimum gas rate flow through the valve said needle member (10) being inserted into the bore of the housing (20) and having at the end corresponding to the inlet hole of the housing a conical tip portion (14) cooperating with the seat (19) at the outlet hole, a screw head (11) at the end corresponding to the inlet hole, a peripheral groove (12) provided with an O-ring gasket (13) located axially immediately near the screw head (11) and an externally threaded portion (17) between said groove (12) and the tip portion (14),
said threaded portion (17) of the needle member (10) being engaged with the threaded surface of the bore of the housing, such that the needle member (10) is movably operable within the housing (20) when actuated at its screw head (11)
characterized
in that the seat (19) of the valve is conical,
in that the threaded portion (17) of the needle member (10) is provided with exactly two symmetrical, diametrally opposed, divergent slanting cuts (21, 22) so as to form two threaded chordal segments (23, 24),
and in that said segments (23, 24) are outwardly deflected by widening said cuts (21, 22) in order to elastically accommodate, in the operating condition, the defects or backlash existing between the external threads of the needle member (10) and the internal threads of the housing (20).

## Patentansprüche

1. Durch ein Drehknopf steuerbares Ventil zum Speisen von Gas in Kochplaten, enthaltend:
- ein Gehaeuse (20) mit einem axialen Loch zwischen einem Einlass loch und einem Auslassloch und mit einem Querloch zum Speisen von Gas zum Ventil, wobei dieses Querloch eine teilweise geschnittene Innenflaeche hat;
- ein Nadelventilstueck (10) mit Mitteln zur Einstellung eines kleinsten Gas-Durchflusses des Ventils, wobei dieses Nadelventilstueck (10) in das Loch des Gehaeuses (20) eingefuehrt ist und ein dem Einlassloch des Gehaeuses entsprechendes Ende hat; mit einem kegelfoermigen Scheitelteil, der mit dem Sitz (19) am Auslassloch mitarbeitet; einem Schraubenkopf (11) an dem dem Einlassloch entsprechenden Ende; einer mit einer O-Ringdichtung (13) versehenen Umfangsnut (12), wobei diese Dichtung in unmittelbarer Naehe des Schraubenkopfes (11) axial angeordnet ist, und mit einem aussenseitig geschnittenen Teil (17) zwischen der Nut (12) und dem Scheitelteil (14);
- wobei der geschnittene Teil (17) des Nadelstueckes (10) in die geschnittene Flaeche des Gehaeuseloches eingeschraubt ist, so dass das Nadelstueck (10) durch einen Schraubenkopf (11) im Gehaeuseloch beweglich betaetigbar ist,
dadurch gekennzeichnet,
dass der geschnittene Teil (17) des Nadelstueckes (10) mit zwei, genau symmetrischen, diametral entgegengesetzten und auseinander erstreckenden Schlitzen (21,22) versehen ist, um so zwei geschnittene Segmente (23,24) zu bilden,
und dass diese Segmente (23,24) durch Ausweitung der Schlitze (21,22) nach aussen abgelenkt sind, um dadurch die Fehler oder Spiele zwischen den aeusseren Gewinden des Nadelstueckes (10) und den inneren Gewinden des Gehaeuses (20) in der Arbeitsstellung elastisch aufzunehmen.

## Revendications

1. Valve à bouton pour alimenter en gas des plateaux chauffants, comprenant:
- une bâche (20) ayant un trou axial entre un trou d'admission et un trou de sortie, un siège (19) au trou de sortie et un trou transversal pour alimenter en gas la valve, ledit trou ayant une surface intérieure taraudeée;
- un pointeau (10) comprenant de moyens pour ajuster le débit minime de gas à travers la valve, ledit pointeau (10) étant inséré dans le trou de la bâche (20) et ayant un bout correspondant au trou d'admission de la bâche (19), une partie de sommet conique (14) coopèrant avec la siege (19) au trou de sortie, un tête (11) d'une vis au bout correspondant au trou d'admission, une rainure périphérique (12) munie d'une bague d'étancheité (13) placée axialement à côté de ladite tête (11) d'une vis et une partie extérieurement filetée entre ladite rainure (12) et ladite partie de sommet (14);
- ladite partie filetée (17) du pointeau (10) étant engagée avec la surface taraudée du trou de la bâche de façon que le pointeau (10) est actionable en translation dans la bâche (20) au moyen de la tête (11) d'une vis;
caractérisée en ce que:
- la siege (19) de la valve est conique;
- la partie filetée (17) du pointeau (10) est munie de deux créneaux inclinés, divergents, exactement symmétriques et diamétralement opposés de façon à former segments filetés (23, 24);
- et lesdits segments (23, 24) sont deflecté à l'extérieur par l'élargissement desdits créneaux (21, 22) afin d'absorber elastiquement, pendant l'operation, les défauts ou jeux existants entre la filetage extérieure du pointeau (10) et la taraudage intérieure de la bâche (20).
